# EUROPEAN PATENT APPLICATION

(11) **EP 3 671 428 A1**
(43) Date of publication of application: **24.06.2020**
(21) Application number: 19217238.5
(22) Date of filing: 17.12.2019
(51) Int. Cl.: G06F 3/12, G06F 1/16, H04N 1/00

(54) **MULTI-PART SCREEN DISPLAYING DOCUMENT PROCESSING STATUS ALPHANUMERICALLY AND GRAPHICALLY**

(30) Priority: 21.12.2018 US 201816229172
(71) Applicant: Xerox Corporation, Webster, NY 14580 (US)
(72) Inventor: COE, Wyatt C., Chatham, NY New York 12037 (US); BROWN, Donald A., Honeoye Falls, NY New York 14472 (US)
(74) Representative: Gill Jennings & Every LLP

(57) **Abstract**

A processor automatically determines the machine/job state of a document processing apparatus. The job/status data is automatically displayed on a first display portion of a multi-part screen of the document processing apparatus. A graphic item that is indicative of the machine/job state is only displayed on a second display portion of the multi-part screen of the document processing apparatus. The graphic item indicates the machine/job state of the document processing apparatus using facial expressions, engineering and/or math icons, etc.

## Description

Systems and methods herein generally relate to document processing and more particularly to using a multi-part screen to display the document processing status alphanumerically and graphically.

User satisfaction with machine interfaces is a strong determiner of user machine ratings. Historically, user interfaces include display screens that present data alphanumerically combined with different forms of keyboard input. Advances have been made by utilizing touchscreens and voice recognition to improve the ease-of-use and increase users' overall machine satisfaction.

However, past attempts to increase the usefulness of user interfaces have historically been limited to finding better ways to input data to, and receive data from, screens of document processing machines, and this limits the ability to achieve high levels of user satisfaction with such machines.

Various apparatuses herein include (among other components) a document processing apparatus, and a user interface connected to at least two non-parallel surfaces of the exterior of the document processing apparatus. More specifically, the user interface includes a multi-part (e.g., curved, multi-part, etc.) screen having at least two planar display portions (e.g., a first display portion and a second display portion) that can be different sizes, each of which displays information differently.

For purposes of clarity, the document processing apparatus is considered to have a bottom adjacent (and possibly parallel to) the surface upon which the document processing apparatus rests (e.g., the floor), a top opposite the bottom, and sides between the top and the bottom that can be approximately perpendicular to the top and the bottom. In some examples herein, this multi-part screen runs along the top and one of the sides (and along the corner between the top and that side). Thus, the first display portion can be said to be positioned on the top (or at least at (adjacent to) the top or approximately parallel to (e.g., within 20% parallel to) the top), while the second display can be said to be positioned on one of the sides (or at least approximately parallel to (e.g., within 20% parallel to) that side) adjacent an area where that side borders the top so as to appear continuous with the first display portion. Thus, the second display portion can be said to be approximately perpendicular to (e.g., within 20% perpendicular to) the floor.

Also, a processor is operatively connected to the screen. The processor is adapted to automatically cause the first display portion to display data, such as job data (e.g., alphanumeric characters providing details of parameters/status of a document processing operation). In contrast, the processor is adapted to automatically cause the second display portion to only display a graphic item indicative of the machine/job state of the document processing apparatus. The machine/job state of the document processing apparatus can relate to error conditions, warning conditions, active processing conditions, and processing complete conditions. In some examples, the graphic item can indicate these machine/job states using facial expressions, engineering and/or math icons, etc.

With such, various methods herein use the processor to automatically determine the machine/job state of the document processing apparatus. These methods automatically display job/status data on the first display portion and display the graphic item that is indicative of the machine/job state only on the second display portion. Again, the process of displaying the graphic item that indicates the machine/job state of the document processing apparatus can be performed using facial expressions, engineering and/or math icons, etc. Thus, this process of displaying the graphic item indicates the machine/job state by graphically displaying error conditions, warning conditions, active processing conditions, processing complete conditions, etc.

These and other features are described in, or are apparent from, the following detailed description.
Figures 1-9 are perspective schematic diagrams illustrating devices herein;
Figure 10 is a flow diagram of various methods herein;
Figure 11 is a schematic diagram illustrating systems herein;
Figure 12 is a schematic diagram illustrating devices herein; and
Figure 13 is a schematic diagram illustrating devices herein.

As mentioned above, past attempts to increase the user-friendliness and usefulness of graphic interfaces have historically been limited to finding better ways to output data from, and receive data into, screens/keyboards, and this (among other factors) has restricted the ability of machines to achieve higher levels of overall user satisfaction. In order to push user satisfaction levels higher, the systems, methods, and apparatuses herein provide unique user interfaces to foster an emotional relationship between the user and the machine. When users "like" the equipment they work with, they are happier at work and more satisfied with their employment.

Specifically, the systems, methods, and apparatuses disclosed herein use a multi-part screen to separately display the document processing status alphanumerically and graphically in order to convey an emotive or emotional machine state to the user. This encourages emotional bonding between the machine and the user, helping the user "like" the equipment. Creating an emotional bond between the user and the machine increase overall user satisfaction with the machine to levels that cannot be achieved simply using improved screen-based data inputs and outputs.

More specifically, the systems, methods, and apparatuses disclosed herein automatically determine the machine/job state of the document processing apparatus (e.g., error conditions, warning conditions, active processing conditions, processing complete conditions, etc.). These systems, methods, and apparatuses then automatically display such job/status data alphanumerically on a first display portion and display an emotive graphic item that is indicative of the machine/job state only on a second display portion. This display of the emotive graphic item that indicates the machine/job state can be made using facial expressions, engineering and/or math icons, etc., in order to provide the document processing apparatus with an emotional output.

The emotive display allows the document processing device to therefore subjectively convey "feelings" and "emotion" (albeit artificial) to the user that are consistent with the current machine/job state, which allows the user to emotionally connect to the machine and subjectively motivates the user to generate feelings of understanding for the document processing apparatus and emotionally bond with the machine. Such emotional machine bonding, while clearly different than emotional bonding that users experience with other humans, pets, and/or other live (animated) items, has historically occurred between humans and many types of machines/devices (inanimate objects) including toys, cars, industrial/farm equipment, etc. For example, automotive designers regularly attempt to make the grill/headlights of automobiles and trucks express certain facial (eye, mouth) emotive states such as cuteness, toughness, aggressiveness, etc., in order to emotionally connect the machine with users.

While the cuteness, toughness, aggressiveness, etc., within grill/headlights of automobiles is static; in contrast, the facial expressions, engineering and/or math icons, etc., displayed on the multi-part screens of apparatus herein changes as the machine/job state changes, to more fully convey machine emotion to a user and to promote emotional bonding.

For example, a user should have past experience of happiness when completing a project, and the machine's display of a smiling face icon (to convey a machine emotional state of happiness upon completing a document processing job) can allow the user to share the machine's (artificial) "happiness" by recalling their own real emotional feelings when completing a project. This "sharing" of the same emotion experience (human's real emotion experienced in the past with the machine's current artificial emotion) at many points of user-machine contact over time works in small steps toward increased emotional bonding between the machine and user. Similarly, when the machine displays a frown when experiencing a paper jam or other error, the user can recall a similar emotion they experienced when encountering difficulties on the way toward achieving goals, encouraging the user to share an emotion with the machine, thereby increasing bonding.

Over time, because the user can recall "real" emotions that they actually experienced and can align those with the synthetic emotional icons being produced by the machine, the user can feel that they share emotions with the machine and thereby emotionally bond with the machine. Emotional bonding can increase user satisfaction with the machine, which can make the user happier to use the machine. Such can make a user's day more pleasant because they "like" the machines that they work with in a similar way that a user may be happier to take a trip in a car that they "like" verses a car they "dislike," even though the activity performed is the same.

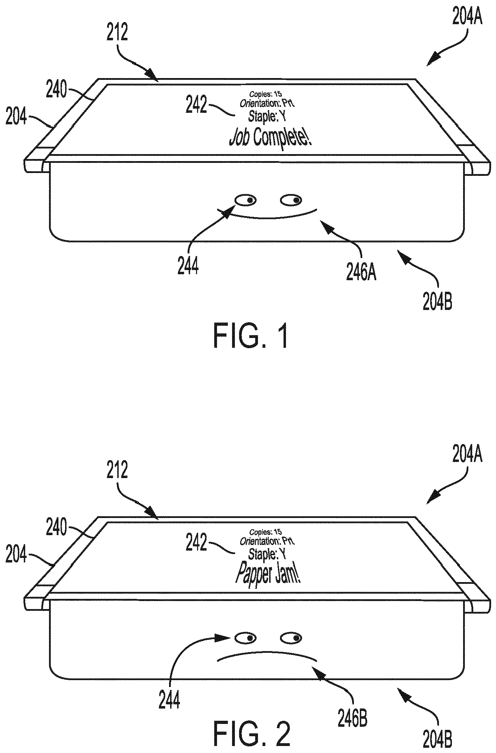

Referring to the drawings, various apparatuses or systems herein include (among other components) a document processing apparatus 200 and/or 204 (e.g., see Figures 1-4 and 12-13) and a user interface 212 connected to at least two non-parallel surfaces of the exterior of the document processing apparatus 204. As shown more specifically in Figures 1-9 the user interface 212 includes a multi-part (e.g., curved, multi-part, etc.) screen 240 having at least two planar display portions (e.g., a first display portion 242 and a second display portion 244) that can be different sizes, each of which displays information differently.

For purposes of clarity, the document processing apparatus 200 and/or 204 (e.g., see Figures 1-4 and 12-13) is considered to have a bottom 204C adjacent (and possibly parallel to) the surface upon which the document processing apparatus 204 rests (e.g., the floor), a top 204A opposite the bottom 204C, and sides 204B between the top 204A and the bottom 204C that can be approximately perpendicular to the top 204A and the bottom 204C.

As shown more clearly in Figures 1-4, this multi-part screen 240 runs along the top 204A and one of the sides 204B (and along the corner between the top 204A and that side 204B). Thus, the first display portion 242 can be said to be positioned on the top 204A (or at least at, or adjacent to, the top 204A or approximately parallel to the top 204A) while the second display 244 can be said to be positioned on one of the sides 204B (or at least approximately parallel to that side 204B) adjacent an area where that side 204B borders the top 204A so as to appear continuous with the first display portion 242. Thus, the second display portion 244 can be said to be approximately perpendicular to the floor. The term "approximately" means within a certain measure (e.g., 5%, 10%, 20%, etc.) of the absolute relationship (parallel, perpendicular, etc.).

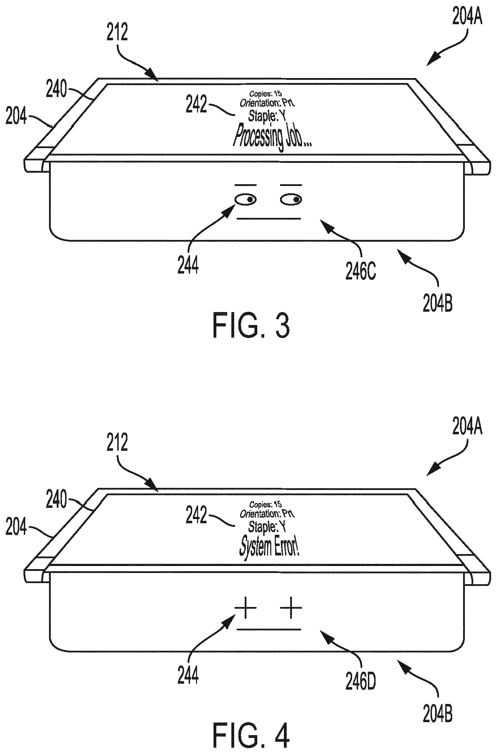

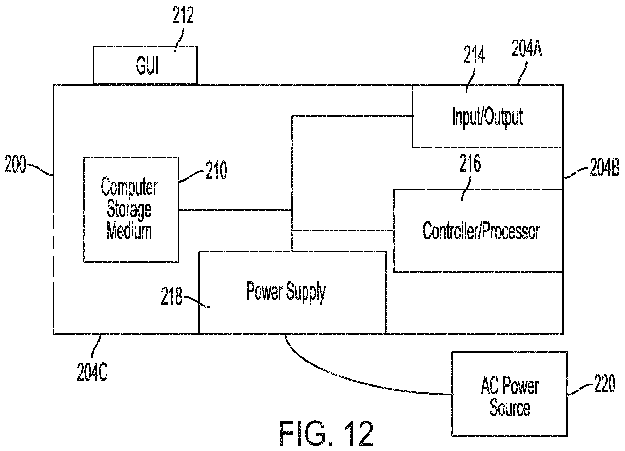

Also, a processor 216/224 (e.g., see Figures 12-13) is operatively connected to the user interface 212 and screen 240. The processor 216/224 is adapted to automatically cause the first display portion 242 to display data, such as job data (e.g., alphanumeric characters providing details of parameters/status of a document processing operation). For example, Figures 1-4 show the first display portion 242 using alphanumeric characters to show the number of copies being made, the sheet orientation, that stapling has been selected. The first display portion 242 in Figures 1-4 also includes alphanumeric characters that output machine or job status including a "job complete" status (Figure 1); a "paper jam" status (Figure 2); a "processing job" status (Figure 3); and a "system error" status (Figure 4).

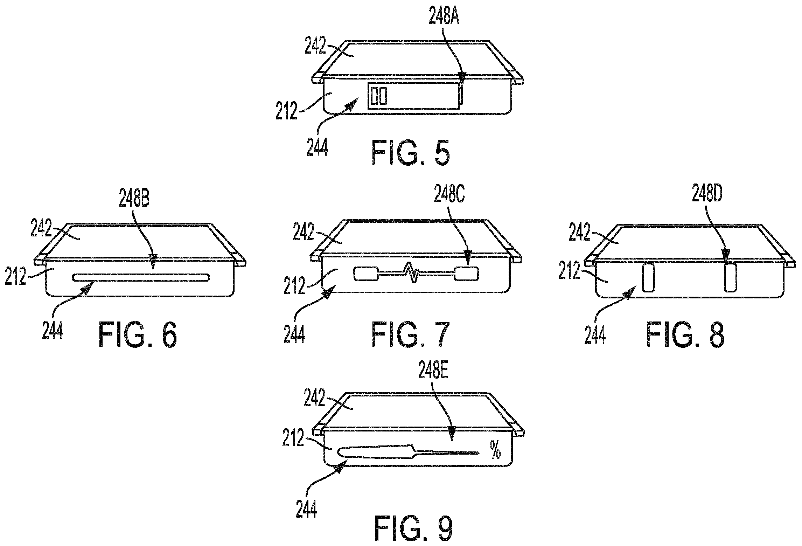

In contrast, the processor 216/224 is adapted to automatically cause the second display portion 244 to only display a graphic item indicative of the machine/job state of the document processing apparatus 204. The machine/job state of the document processing apparatus 204 can relate to error conditions, warning conditions, active processing conditions, and processing complete conditions. In some examples, the graphic item can indicate these machine/job states using facial expressions 246A-246D, (Figures 1-4), engineering and/or math icons 248A-248E (Figures 5-9), etc.

More specifically, in Figure 1, the machine/job state is shown in the first display portion 242 using alphanumeric characters is the job status "job complete" and the graphic item 246A in the second display portion 244 also indicates the same state emotionally using a smiling facial expression graphic item 246A. Also, in Figure 2, the machine/job state is shown in the first display portion 242 using alphanumeric characters is the machine status "paper jam" and the graphic item 246B in the second display portion 244 also indicates the same state emotionally using a frowning facial expression graphic item 246B. Similarly, in Figure 3, the machine/job state is shown in the first display portion 242 using alphanumeric characters is the job status "processing job" and the graphic item 246C in the second display portion 244 also indicates the same state emotionally using a concentration facial expression graphic item 246C. The same concept is shown in Figure 4, where the machine/job state is shown in the first display portion 242 using alphanumeric characters is the machine status "system error" and the graphic item 246D in the second display portion 244 also indicates the same state emotionally using an unconscious facial expression graphic item 246D.

As noted previously, the machine's display of a smiling face icon 246A (to convey a machine emotional state of happiness upon completing a document processing job) can allow the user to share the machine's (artificial) "happiness" by recalling their own real emotional feelings when completing a project. This "sharing" of the same emotion experience (human's real emotion experienced in the past with the machine's current artificial emotion) at many points of user-machine contact over time works in small steps toward increased emotional bonding between the machine and user. Similarly, when the machine displays a frown 246B when experiencing a paper jam or other error, the user can recall a similar emotion they experienced when encountering difficulties on the way toward achieving goals, encouraging the user to share an emotion with the machine, thereby increasing bonding.

Figures 5-9 show alternative engineering and/or math icons 248A-248E to similarly emotionally or graphically indicate machine/job state. Specifically, Figure 5 shows an engineering and/or math icon 248A that indicates the amount of charge remaining in batteries. Figure 6 shows an engineering and/or math icon 248B that indicates a ready or job processing state. Figure 7 shows an engineering and/or math icon 248C that indicates a communication status. Figure 8 shows an engineering and/or math icon 248D that indicates a machine error state. Figure 9 shows an engineering and/or math icon 248A that indicates the percentage job completion.

As can be seen in Figures 1-9, the second display portion 244 can be smaller and have different dimensions (wider, etc.) than the first display portion. By being relatively wider than tall, and by being perpendicular to the floor/ground; the position, orientation and size of second display portion 244 is more similar to a live animated being (human, pet, etc.) than is the first display portion 242 which is on (and approximately parallel to) the top. In other words, the second display portion 244 is sized and positioned to "face" a user when the user is looking parallel to the ground and is positioned to have dimensions to display facial features, allowing the second display portion 244 to appear more animated. This orientation/position differentiates the portion of the screen 244 that conveys emotion from the "data" part of the screen 242 that the user would see only when looking down at the first display portion 242.

In addition to the more animate-like position/orientation, the second display portion 244 only displays graphic items indicative of the machine/job state of the document processing apparatus 204 and does not display alphanumeric data, which allows the user to become familiar with the second display portion 244 as being the emotive portion of the display. In other words, by only displaying graphic items indicative of the machine/job state, the user can become conditioned to regularly expect emotive icons from the second display portion 244. This allows the user to look to the second display portion 244 for expected emotive output whenever the user encounters the document processing device 200/204, which helps reinforce emotional connections generated by previous user contacts with the document processing device 200/204. Such promotes and reinforces the emotive bond between the user and the machine.

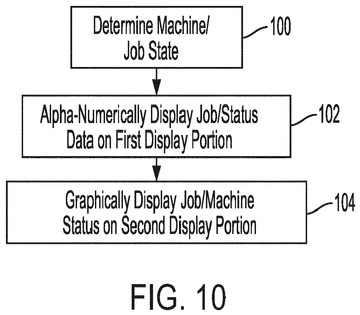

Figure 10 is flowchart illustrating exemplary methods herein. In item 100, these methods use the processor to automatically determine the machine/job state of the document processing apparatus. In item 102, these methods automatically alphanumerically display the job/status data on the first display portion. In item 104, these methods display the graphic item that is indicative of the machine/job state only on the second display portion.

Again, the process in item 104 of displaying the graphic item that indicates the machine/job state of the document processing apparatus can be performed using facial expressions, engineering and/or math icons, etc. Thus, this process of displaying the graphic item in item 104 indicates the machine/job state by graphically displaying error conditions, warning conditions, active processing conditions, processing complete conditions, etc.

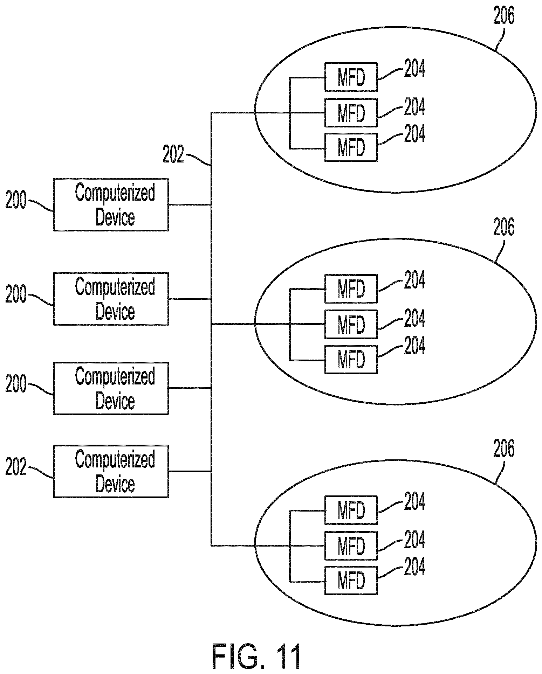

As shown in Figure 11, exemplary systems and methods herein include various computerized devices 200, 204 located at different physical locations 206. The computerized devices 200, 204 can include print servers, printing devices, personal computers, etc., and are in communication (operatively connected to one another) by way of a local or wide area (wired or wireless) network 202.

Figure 12 illustrates a computerized device 200, which can be used with systems and methods herein and can comprise, for example, a print server, a personal computer, a portable computing device, etc. The computerized device 200 includes a controller/tangible processor 216 and a communications port (input/output) 214 operatively connected to the tangible processor 216 and to the computerized network 202 external to the computerized device 200. Also, the computerized device 200 can include at least one accessory functional component, such as a graphical user interface (GUI) assembly 212. The user may receive messages, instructions, and menu options from, and enter instructions through, the graphical user interface or control panel 212.

The input/output device 214 is used for communications to and from the computerized device 200 and comprises a wired device or wireless device (of any form, whether currently known or developed in the future). The tangible processor 216 controls the various actions of the computerized device. A non-transitory, tangible, computer storage medium device 210 (which can be optical, magnetic, capacitor based, etc., and is different from a transitory signal) is readable by the tangible processor 216 and stores instructions that the tangible processor 216 executes to allow the computerized device to perform its various functions, such as those described herein. Thus, as shown in Figure 12, a body housing has one or more functional components that operate on power supplied from an alternating current (AC) source 220 by the power supply 218. The power supply 218 can comprise a common power conversion unit, power storage element (e.g., a battery, etc.), etc.

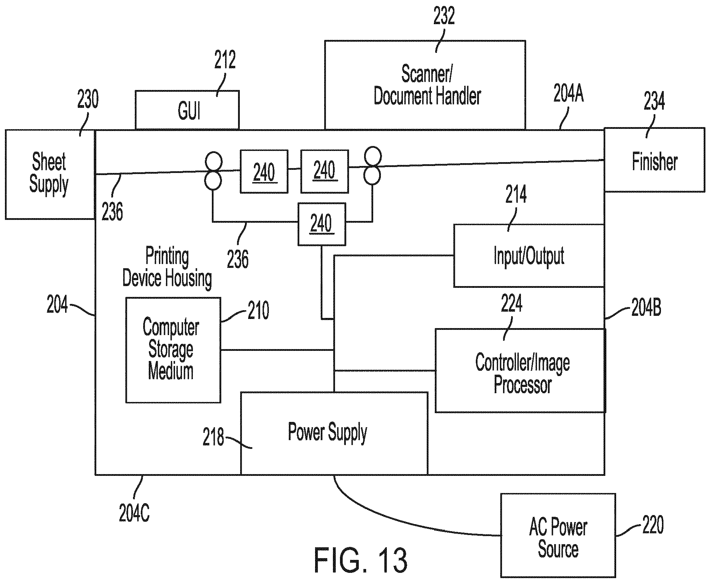

Figure 13 illustrates a computerized device that is a printing device 204, which can be used with systems and methods herein and can comprise, for example, a printer, copier, multi-function machine, multi-function device (MFD), etc. The printing device 204 includes many of the components mentioned above and at least one marking device (printing engine(s)) 240 operatively connected to a specialized image processor 224 (that is different from a general purpose computer because it is specialized for processing image data), a media path 236 positioned to supply continuous media or sheets of media from a sheet supply 230 to the marking device(s) 240, etc. After receiving various markings from the printing engine(s) 240, the sheets of media can optionally pass to a finisher 234 which can fold, staple, sort, etc., the various printed sheets. Also, the printing device 204 can include at least one accessory functional component (such as a scanner/document handler 232 (automatic document feeder (ADF)), etc.) that also operate on the power supplied from the external power source 220 (through the power supply 218).

The one or more printing engines 240 are intended to illustrate any marking device that applies a marking material (toner, inks, etc.) to continuous media or sheets of media, whether currently known or developed in the future and can include, for example, devices that use a photoreceptor belt or an intermediate transfer belt or devices that print directly to print media (e.g., inkjet printers, ribbon-based contact printers, etc.).

As noted previously, the processor 224 automatically determines the machine/job state of the document processing apparatus 200/204. The processor 224 causes the first display portion 242 to automatically display the job/status data and causes the second display portion 244 to automatically only display the graphic item 246A-246D, 248A-248E that is indicative of the machine/job state. Again, the process of displaying the graphic item 246A-246D, 248A-248E that indicates the machine/job state of the document processing apparatus 200/204 can be performed using facial expressions, engineering and/or math icons, etc.

While some exemplary structures are illustrated in the attached drawings, those ordinarily skilled in the art would understand that the drawings are simplified schematic illustrations and that the claims presented below encompass many more features that are not illustrated (or potentially many less) but that are commonly utilized with such devices and systems. Therefore, Applicants do not intend for the claims presented below to be limited by the attached drawings, but instead the attached drawings are merely provided to illustrate a few ways in which the claimed features can be implemented.

Many computerized devices are discussed above. Computerized devices that include chip-based central processing units (CPU's), input/output devices (including graphic user interfaces (GUI), memories, comparators, tangible processors, etc.) are well-known and readily available devices produced by manufacturers. Such computerized devices commonly include input/output devices, power supplies, tangible processors, electronic storage memories, wiring, etc., the details of which are omitted herefrom to allow the reader to focus on the salient aspects of the systems and methods described herein.

The terms printer or printing device as used herein encompasses any apparatus, such as a digital copier, bookmaking machine, facsimile machine, multi-function machine, etc., which performs a print outputting function for any purpose. The details of printers, printing engines, etc., are well-known and are not described in detail herein to keep this disclosure focused on the salient features presented. The systems and methods herein can encompass systems and methods that print in color, monochrome, or handle color or monochrome image data. All foregoing systems and methods are specifically applicable to electrostatographic and/or xerographic machines and/or processes.

In addition, terms such as "right", "left", "vertical", "horizontal", "top", "bottom", "upper", "lower", "under", "below", "underlying", "over", "overlying", "parallel", "perpendicular", etc., used herein are understood to be relative locations as they are oriented and illustrated in the drawings (unless otherwise indicated). Terms such as "touching", "on", "in direct contact", "abutting", "directly adjacent to", etc., mean that at least one element physically contacts another element (without other elements separating the described elements). Further, the terms automated or automatically mean that once a process is started (by a machine or a user), one or more machines perform the process without further input from any user. Additionally, terms such as "adapted to" mean that a device is specifically designed to have specialized internal or external components that automatically perform a specific operation or function at a specific point in the processing described herein, where such specialized components are physically shaped and positioned to perform the specified operation/function at the processing point indicated herein (potentially without any operator input or action). In the drawings herein, the same identification numeral identifies the same or similar item.

## Claims

1. An apparatus comprising:
a document processing apparatus;
a user interface connected to an exterior of the document processing apparatus, wherein the user interface includes a screen having at least two planar display portions that lie in different planes; and
a processor operatively connected to the screen,
wherein the processor is adapted to automatically cause a first display portion of the at least two planar display portions to display data, and
wherein the processor is adapted to automatically cause a second display portion of the at least two planar display portions to only display a graphic item indicative of a machine/job state of the document processing apparatus.

2. The apparatus according to claim 1, wherein the graphic item indicates the machine/job state of the document processing apparatus using facial expressions.

3. The apparatus according to claim 1, wherein the graphic item indicates the machine/job state of the document processing apparatus using engineering and math icons.

4. The apparatus according to claim 1, wherein the machine/job state of the document processing apparatus comprises error conditions, warning conditions, active processing conditions, and processing complete conditions.

5. The apparatus according to claim 1, wherein the document processing apparatus has a bottom adjacent a surface upon which the document processing apparatus rests, a top opposite the bottom, and sides between the top and the bottom and approximately perpendicular to the top and the bottom,
wherein the first display portion is positioned on the top and the second display portion is positioned on one of the sides.

6. The apparatus according to claim 1, wherein the at least two planar display portions are non-parallel to one another.

7. The apparatus according to claim 1, wherein the at least two planar display portions are different sizes.

8. An apparatus comprising:
a document processing apparatus;
a curved user interface connected to at least two non-parallel surfaces of an exterior of the document processing apparatus, wherein the user interface includes a screen having at least two planar display portions; and
a processor operatively connected to the screen,
wherein the processor is adapted to automatically cause a first display portion of the at least two planar display portions to display data, and
wherein the processor is adapted to automatically cause a second display portion of the at least two planar display portions to only display a graphic item indicative of a machine/job state of the document processing apparatus.

9. The apparatus according to claim 8, wherein the graphic item indicates the machine/job state of the document processing apparatus using facial expressions.

10. The apparatus according to claim 8, wherein the graphic item indicates the machine/job state of the document processing apparatus using engineering and math icons.

11. The apparatus according to claim 8, wherein the machine/job state of the document processing apparatus comprises error conditions, warning conditions, active processing conditions, and processing complete conditions.

12. The apparatus according to claim 8, wherein the document processing apparatus has a bottom adjacent a surface upon which the document processing apparatus rests, a top opposite the bottom, and sides between the top and the bottom and approximately perpendicular to the top and the bottom,
wherein the first display portion is positioned on the top and the second display portion is positioned on one of the sides.

13. The apparatus according to claim 12, wherein the second display portion is approximately perpendicular to the surface upon which the document processing apparatus rests.

14. The apparatus according to claim 8, wherein the at least two planar display portions are different sizes.

15. A method comprising:
determining, by a processor of a document processing apparatus, a machine/job state of the document processing apparatus, wherein the document processing apparatus comprises a user interface connected to an exterior of the document processing apparatus, wherein the user interface includes a screen having at least two planar display portions that lie in different planes,
displaying data on a first display portion of the at least two planar display portions to; and
displaying only a graphic item indicative of the machine/job state of the document processing apparatus on a second display portion of the at least two planar display portions.

16. The method according to claim 15, wherein the displaying the graphic item indicates the machine/job state of the document processing apparatus using facial expressions.

17. The method according to claim 15, wherein the displaying the graphic item indicates the machine/job state of the document processing apparatus using engineering and math icons.

18. The method according to claim 15, wherein the displaying the graphic item indicates the machine/job state by graphically displaying error conditions, warning conditions, active processing conditions, and processing complete conditions.

19. The method according to claim 15, wherein the document processing apparatus has a bottom adjacent a surface upon which the document processing apparatus rests, a top opposite the bottom, and sides between the top and the bottom and approximately perpendicular to the top and the bottom,
wherein the first display portion is positioned on the top and the second display portion is positioned on one of the sides.

20. The method according to claim 15, wherein the at least two planar display portions are non-parallel to one another and are different sizes.
